# EUROPEAN PATENT APPLICATION

(11) **EP 4 495 601 A1**
(43) Date of publication of application: **22.01.2025**
(21) Application number: 22932351.4
(22) Date of filing: 26.12.2022
(51) Int. Cl.: G01N 35/02, G01N 35/00, G01N 35/04

(54) **AUTOMATIC ANALYSIS DEVICE**

(30) Priority: 17.03.2022 JP 2022042994
(71) Applicant: HITACHI HIGH-TECH CORPORATION, Tokyo 105-6409 (JP)
(72) Inventor: MOHRI, Kyohsuke, Tokyo 105-6409 (JP); TAKAKURA, Tatsuki, Tokyo 105-6409 (JP); NODA, Kazuhiro, Tokyo 105-6409 (JP)
(74) Representative: MERH-IP Matias Erny Reichl Hoffmann Patentanwälte PartG mbB
(86) International application number: PCT/JP2022/048038
(87) International publication number: WO 2023/176094

(57) **Abstract**

To provide an automatic analyzer which allows replacement of a consumable without interrupting analytic operations while suppressing increase in size and cost of the device. The consumable supply section includes a first consumable holder capable of holding a first consumable storage vessel for storing multiple consumables, a second consumable holder capable of holding a second consumable storage vessel for storing multiple consumables, and a conveying mechanism for conveying the consumables in the first and the second consumable holders to an analysis section. While the analysis section is executing analytic operations, the control section executes control operations to allow the access of the operator to the first consumable holder, and to disable the access of the operator to the second consumable holder. While the analysis section is not executing the analytic operations, the control section executes control operations to allow the access of the operator to the first and the second consumable holders.

## Description

### Technical Field

This invention relates to an automatic analyzer.

### Background Art

The automatic analyzer reacts blood, urine, or another biological sample (sample) with an analytical reagent that reacts specifically with a component to be measured in the sample, and quantitatively detects a complex produced by such a reaction using a spectroscopic technique such as electrochemiluminescence, and thus automatically performs a process from measurement of the component to output of results. As a technology involved in the automatic analyzer, there is disclosed an automatic analyzer including a reagent disposal tray capable of mounting thereon multiple reagents extracted from a reagent keeping unit (see patent literature 1).

### Citation List

### Patent Literature

Patent Literature 1: Japanese Unexamined Patent Application Publication No. 2012-021862

### Summary of Invention

### Technical Problem

For the automatic analyzer, if analytic operations are interrupted during replacement, collection, or disposal of a consumable or a reagent, throughput or test accuracy may be reduced. In patent literature 1, therefore, a dedicated mechanism is provided for replacing consumables without interrupting analytic operations, in addition to a mechanism for normal replacement of consumables. However, if a dedicated mechanism is provided, the analyzer may become larger and more costly.

In view of the above, an object of the invention is to provide an automatic analyzer, which makes it possible to replace consumables without interrupting analytic operations while suppressing increase in size and cost of the analyzer. Solution to Problem

The present invention includes a plurality of means for solving the problems, and one example thereof is as follows. An automatic analyzer includes: an analysis section for executing a process required for analyzing a sample; a consumable supply section for supplying a consumable required for analysis to the analysis section; and a control section for controlling operations of the analysis section and the consumable supply section. The consumable supply section includes a first consumable holder capable of holding a first consumable storage vessel for storing multiple consumables, a second consumable holder capable of holding a second consumable storage vessel for storing multiple consumables, and a conveying mechanism for conveying the consumables held by the first consumable holder and the second consumable holder to the analysis section. The control section executes controlling operations to allow access of an operator to the first consumable holder, and to disable access of the operator to the second consumable holder while the analysis section is executing analytic operations, and to allow access of the operator to the first and the second consumable holders while the analysis section is not executing the analytic operations. Advantageous Effects of Invention

According to the invention, it is possible to replace consumables without interrupting analytic operations while no dedicated mechanism is provided so as to suppress increase in size and cost of the analyzer, resulting in improvement in throughput.

### Brief Description of Drawings

Fig. 1 is a schematic view of an overall structure of an automatic analyzer.
Fig. 2 illustrates a positional relationship between a reaction vessel tray and a cover.
Fig. 3 is a flowchart representing a process of operating a main tray and a buffer tray during analysis.
Fig. 4 is a flowchart representing content of a reaction vessel tray replacement process.
Fig. 5 is a flowchart representing content of a main tray replacement process in a standby state for analysis.
Fig. 6 is a flowchart representing content of a buffer tray replacement process in a standby state for analysis.
Fig. 7 illustrates a use order of reaction vessels arranged on the main tray.
Fig. 8 illustrates a use order of reaction vessels arranged on the buffer tray.
Fig. 9 is a flowchart representing content of a reaction vessel tray condition determination process.
Fig. 10 is a function block diagram of a control section in the case of executing the reaction vessel tray condition determination process through end operation of a first reaction vessel transportation unit.
Fig. 11 is a state management table used for condition determination process to the main tray and the buffer tray. Description of Embodiments

Hereinafter, one embodiment of the invention will be described with reference to the drawings. Although the embodiment will be exemplarily described with a composite-type automatic analyzer that performs both immunological and biochemical tests, the invention can also be applied to another automatic analyzer having multiple readers.

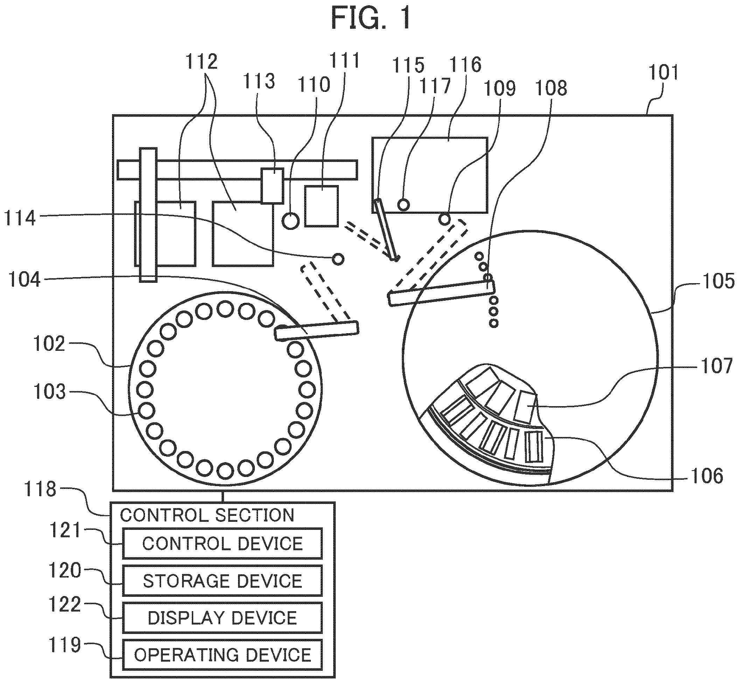

Fig. 1 is a schematic view of an overall configuration of an automatic analyzer.

In Fig. 1, an automatic analyzer 101 analyzes a sample using a reagent corresponding to a predetermined analysis item, and is roughly configured of a sample mount disc 102, a sample dispensing mechanism 104, a reagent storage 105, a reagent dispensing mechanism 108, a first reaction vessel transportation unit (conveying mechanism) 113, a reaction vessel disposal hole 110, an incubator block 111, reaction vessel trays 112, a second reaction vessel transportation unit 115, an immunodetection unit 116, and a control section 118.

A configuration including the incubator block 111 and the immunodetection unit 116, which each use a consumable such as a reaction vessel supplied by the first reaction vessel transportation unit 113, configures an analysis section, which executes a process necessary for analysis of the sample, and a configuration including the reaction vessel trays 112 and the first reaction vessel transportation unit 113 configures a consumable supply section that supplies a consumable necessary for analysis to the analysis section.

The sample mount disc 102 has a structure in which a plurality of sample containers 103 each housing a sample are arranged in a ring shape. When a sample is dispensed from the sample container 103 to the reaction vessel, the sample mount disc 102 rotates clockwise or counterclockwise to transport a sample container 103 as a dispensing target to a sample aspiration position (access position of the sample dispensing mechanism 104).

The reagent storage 105 is a mechanism to hold reagent containers each holding a reagent while keeping the reagent containers cool, and includes a reagent disc 106 and a reagent container holder 107.

In this configuration, a plurality of reagent container holders 107 are arranged on the reagent disc 106 in a double ring shape while respectively holding reagent containers, so that a plurality of reagent containers can be held. The reagent disc 106 has a rotary drive mechanism that performs rotary movement to move each of the reagent containers to a predetermined position on the circumference.

A plurality of unused reaction vessels are disposed on each reaction vessel tray 112 in order to mix and react the sample with the reagent. As mechanisms to convey the reaction vessels on the reaction vessel tray 112, there are provided the first reaction vessel transportation unit 113 including a reaction vessel grasping mechanism for grasping the reaction vessel and a drive mechanism for driving the reaction vessel grasping mechanism in the X-axis, Y-axis, and Z-axis directions, and the second reaction vessel transportation unit 115 including a reaction vessel grasping mechanism for grasping the reaction vessel, a rotary drive mechanism for rotating the reaction vessel grasping mechanism, and a vertical drive mechanism for driving the reaction vessel vertically.

The first reaction vessel transportation unit 113 takes a reaction vessel from the reaction vessel tray 112, and while grasping the reaction vessel, moves the reaction vessel between a sample discharge position 114 where a sample is dispensed to the reaction vessel, the incubator block 111 for reacting a liquid mixture (reaction liquid) of the sample and the reagent housed in the reaction vessel, and the reaction vessel disposal hole 110 through which the reaction vessel subjected to measurement is discarded.

While grasping the reaction vessel, the second reaction vessel transportation unit 115 moves the reaction vessel between the sample discharge position 114 where a sample is dispensed to the reaction vessel, a reagent discharge position 109 where a reagent is dispensed to the reaction vessel, and a reaction liquid aspiration position 117 where the reaction liquid housed in the reaction vessel is aspirated and captured into the immunodetection unit 116 that measures a reaction signal of the reaction liquid.

The incubator block 111 is a mechanism for reacting the sample with the reagent, and is temperature-controlled to facilitate the reaction between the sample and the reagent.

The sample dispensing mechanism 104 includes a rotary drive mechanism, a vertical drive mechanism, and a dispensing probe, and moves the dispensing probe between a sample aspiration position (access position of the sample dispensing mechanism 104) on the sample mount disc 102 and the sample discharge position 114 with the rotary drive mechanism and the vertical drive mechanism. Specifically, the sample dispensing mechanism 104 aspirates a predetermined amount of sample from the sample container 103 conveyed to the aspiration position of the sample on the sample mount disc 102, and discharges the sample to the reaction vessel conveyed to the sample discharge position 114.

The reagent dispensing mechanism 108 is for immunity analysis. The reagent dispensing mechanism 108 includes a rotary drive mechanism, a vertical drive mechanism, and a dispensing probe. The reagent dispensing mechanism 108 rotates and descends to a position of a predetermined type of reagent container on the reagent disc 106, aspirates a predetermined amount of reagent, and moves up. Subsequently, the reagent dispensing mechanism 108 rotates and descends, and discharges the reagent to the reaction vessel conveyed to the reagent discharge position 109.

A processing flow of the immunity analysis is now described.

In the immunity analysis, first, the first reaction vessel transportation unit 113 moves the reaction vessel from the reaction vessel tray 112 to the sample discharge position 114.

Subsequently, the sample dispensing mechanism 104 dispenses a predetermined amount of sample to the reaction vessel located at the sample discharge position.

Subsequently, the reaction vessel, to which the sample has been discharged, is moved by the second reaction vessel transportation unit 115 to the reagent discharge position 109.

The reagent dispensing mechanism 108 dispenses a predetermined amount of reagent to the reaction vessel located at the reagent discharge position 109.

After dispensing the reagent, the reaction vessel is moved by the first reaction vessel transportation unit 113 to the incubator block 111.

Once the reaction process between the sample and the reagent is completed on the incubator block 111, the reaction vessel is moved to the sample discharge position 114 by the first reaction vessel transportation unit 113.

Subsequently, the reaction vessel is moved by the second reaction vessel transportation unit 115 to the reaction liquid aspiration position 117 in the immunodetection unit 116.

Subsequently, the reaction liquid is aspirated to a detection section in the immunodetection unit 116 for measurement of the response signal.

After the signal measurement, the reaction vessel is moved to the sample discharge position 114 by the second reaction vessel transportation unit 115, and is then moved to the reaction vessel disposal hole 110 by the first reaction vessel transportation unit 113 and discarded.

The control section 118 controls overall operation of the automatic analyzer 101, including operation of each internal device, and includes an operating device 119 including input devices such as a mouse and a keyboard, a storage device 120 storing, for example, control parameters corresponding to various units, a control device 121 including, for example, a hardware board and a computer, and a display device 122, for example, a display. The operating device 119 and the display device 122 may be achieved by a touch display integrating an operation function and a display function.

Furthermore, the control device 121 may be configured in a form of hardware with a dedicated circuit board or configured by software executed by a computer. When configured by hardware, the control device can be achieved by integrating a plurality of arithmetic units, which each execute processing, on a wiring board, or in a semiconductor chip or a package. When configured by software, the control device can be achieved by installing a high-speed general-purpose CPU in a computer and executing a program that performs desired arithmetic processing. It is also possible to upgrade an existing device using a recording medium on which the program is recorded. The devices, the circuit, and the computer are connected via wired or wireless networks, so that data is transmitted/received therebetween as appropriate.

Operations of the reaction vessel tray 112 (consumable housing vessel) and the reaction vessels (consumables) housed in the reaction vessel tray 112 in this embodiment are now described. In this embodiment, the reaction vessel tray and the reaction vessels are merely shown as examples of the consumable housing vessel and the consumables. For example, the reaction vessels and a dispensing tip may be housed as consumables in the consumable housing vessel.

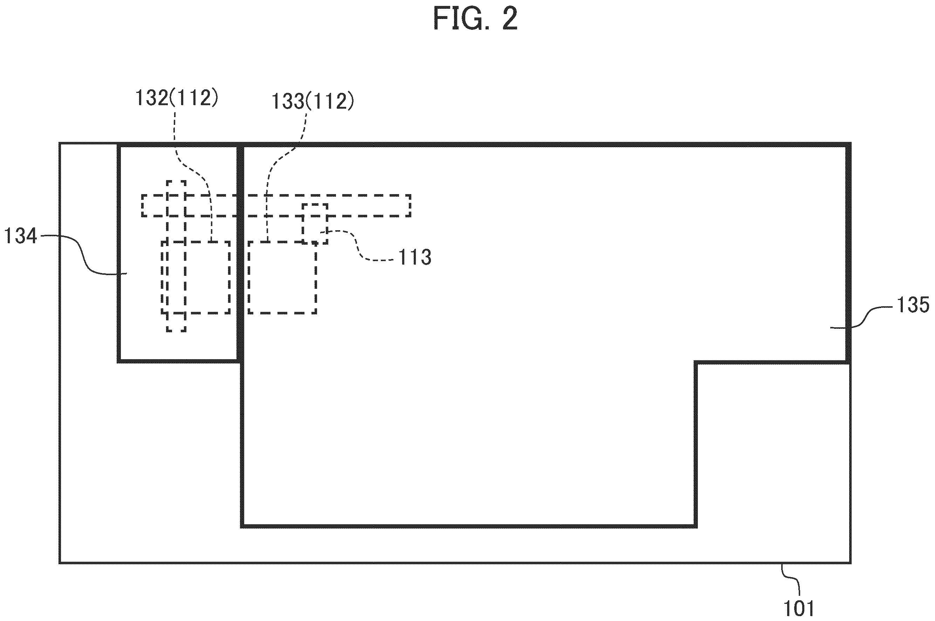

Fig. 2 illustrates a positional relationship between each reaction vessel tray and a cover.

In Fig. 2, the reaction vessel trays 112 are disposed as a first consumable housing vessel (hereinafter, referred to as a main tray 132) and a second consumable housing vessel (hereinafter, referred to as a buffer tray 133).

The main tray 132 is covered with a main tray cover 134 having an opening/closing lock mechanism, and the buffer tray 133 is covered, together with the analysis section, with a top cover 135 having an opening/closing lock mechanism. In another possible configuration, a plurality of main trays 132 and a plurality of buffer trays 133 are respectively arranged side by side on a plane, and the main trays 132 are covered with the main tray cover 134, while the buffer trays 133 are covered with the top cover 135.

The opening/closing lock mechanisms of the main tray cover 134 and the top cover 135 are different from each other, and separately controlled for opening or closing by the control section 118. When locked by the opening/closing lock mechanism (locked state), the main tray cover 134 cannot be opened by an operator, but when unlocked by the opening/closing lock mechanism (unlocked state), it can be opened and closed by the operator. Similarly, the top cover 135 cannot be opened by the operator in the locked state, but can be opened and closed by the operator in the unlocked state.

The opening/closing lock mechanism of the main tray cover 134 can be controlled to be in the unlocked state only when the first reaction vessel transportation unit 113 evacuates to an area where it cannot be accessed by an operator merely by opening operation of the main tray cover 134, that is, an area where the first reaction vessel transportation unit 113 is untouchable (evacuated area), for example, an area covered with the top cover 135 (however, conveying operation of the reaction vessel is possible within the evacuated area).

Similarly, the opening/closing lock mechanism of the top cover 135 can be controlled to be in the unlocked state only when the first reaction vessel transportation unit 113 is evacuated to a predetermined area outside the area on the buffer tray 133 (e.g., an evacuation area where the top of the unit 113 is covered) and is in a stopped state.

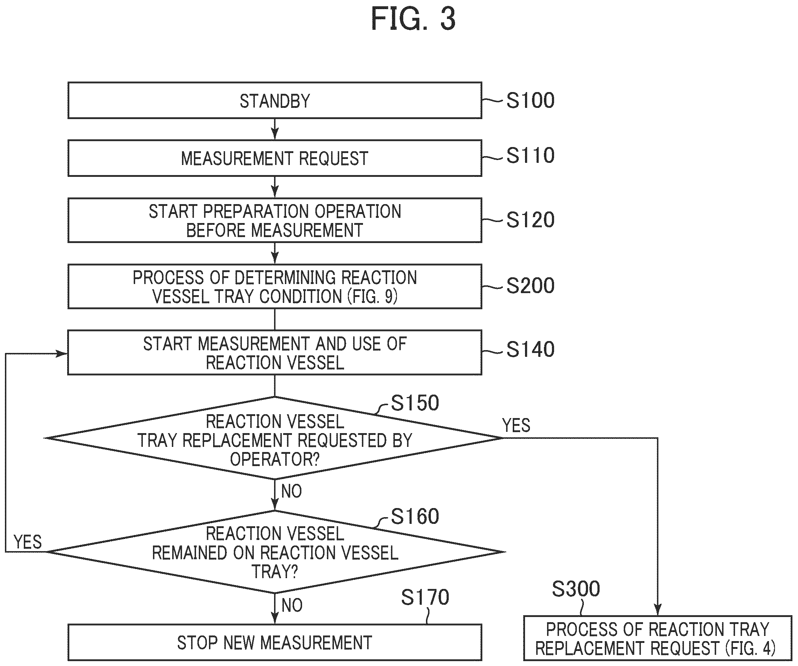

Fig. 3 is a flowchart showing a process of operating the main tray and the buffer tray during analytic operations.

In Fig. 3, when the automatic analyzer 101 is in a standby state, in which an analysis request is acceptable (step S100), the operating device 119 makes a measurement request (step S110). The measurement request may be transmitted/received from an external host computer or entered manually by an operator.

When the measurement request is made, the control section 118 starts preparation operation before measurement operation, and performs reset of various mechanical sections and replacement of system water in syringes and flow paths connected to the sample dispensing mechanism 104 and the reagent dispensing mechanism 108 (step S120).

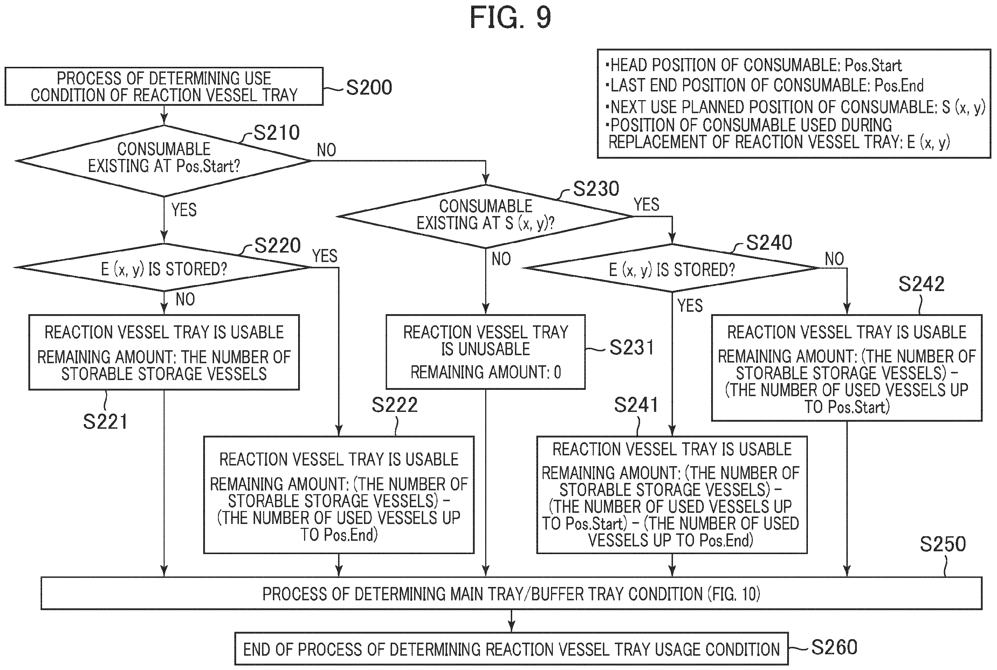

Subsequently, a reaction vessel tray condition determination process is performed to determine conditions of the main tray 132 and the buffer tray 133 (presence of the tray or remaining number of reaction vessels on the tray) (step S200, described in detail later with reference to Fig. 9).

Subsequently, the measurement operation is started, and use of the reaction vessel on the main tray 132 or the buffer tray 133 is started (step S140).

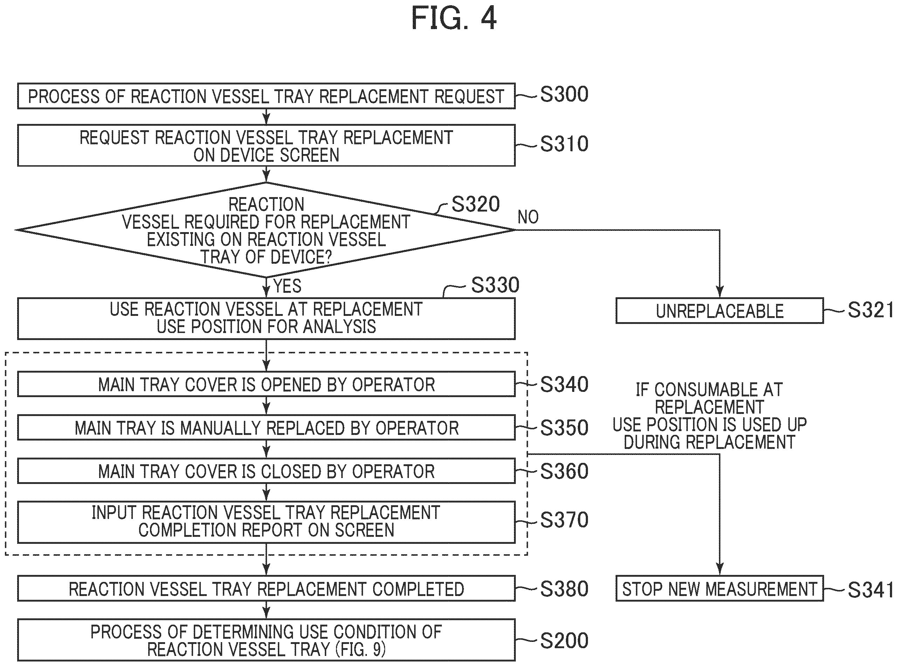

Whether replacement of the main tray 132 is requested by an operator is determined (step S150), and if the determination result is YES, a reaction-tray replacement request process is performed to determine whether the main tray 132 can be replaced (step S300; described in detail later with reference to Fig. 4).

If the determination result in step S150 is NO, that is, if replacement of the main tray 132 is not requested, the remaining number of usable reaction vessels on the reaction vessel tray 112 is determined based on the information stored in the storage device 120 (step S160).

If the determination result in step S160 is YES, that is, if some reaction vessels remain, the processing returns to step S140, and the measurement operation using the reaction vessel is continued. If the determination result in step S160 is NO, that is, if no reaction vessel remains, no measurement is newly performed, and an operator is informed of that (step S170).

Fig. 4 is a flowchart showing the contents of the reaction vessel tray replacement process shown in Fig. 3.

In the reaction-vessel-tray replacement request process (Fig. 3: step S300) in Fig. 4, when receiving a replacement request of the main tray 132 from an operator via the operating device 119 (step S310), the control section 118 determines whether there is a reaction vessel necessary for replacement of the main tray 132 based on a use condition of the buffer tray 133, which is stored in the storage device 120 (step S320), and if the determination result is NO, that is, if there is no reaction vessel necessary for the replacement, the control section 118 notifies the operator that the replacement is not allowed (step S321). The replacement request of the main tray 132 in step S310 may be transmitted/received from an external host computer.

If the determination result in step S320 is YES, that is, if there is a reaction vessel necessary for the replacement, the control section 118 accepts the replacement, and uses, for analytic operations, a reaction vessel located at a reaction vessel use position during replacement of the main tray 132 (step S330).

If the replacement is accepted in step S330, the operator opens the main tray cover 134 (step S340). At this time, the opening/closing lock of the main tray cover 134 is controlled to be unlocked (in an unlocked state).

Subsequently, the operator manually replaces the main tray 132 (step S350), and closes the main tray cover 134 (step S360) .

Subsequently, the operator enters a completion report of replacement of the main tray 132 on a screen of the operating device 119, so that replacement operation of the main tray 132 is completed (step S370). The replacement completion report may be transmitted/received from an external host computer.

However, if there is no more reaction vessel at the reaction vessel use position at the time of replacement of the main tray 132 during the process from step S340 to step S370, new measurement is stopped (step S341) .

When the replacement operation of the main tray 132 is completed in step S370, determination operation of use states of the main tray 132 and the buffer tray 133 is then performed (step S380; described in detail later with reference to Fig. 9) .

As described above, in this embodiment, the main tray cover 134 for the main tray 132 and the top cover 135 for the buffer tray 133 are separately opened and closed and separately locked and unlocked, which allows operator's access to the main tray 132 while limiting operator's access to the buffer tray 133, which requires analytic operations to be stopped, making it possible to replenish consumables without interrupting the analytic operations.

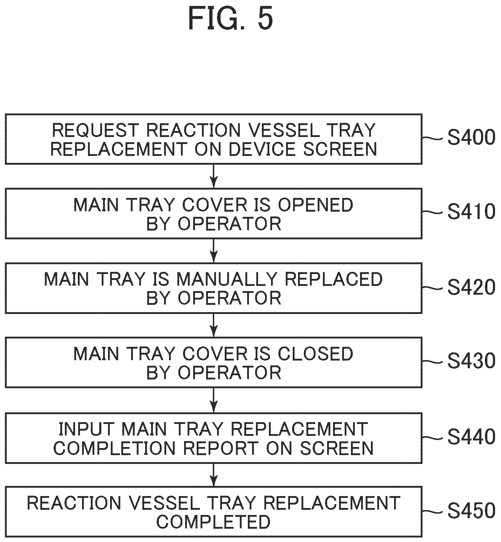

Fig. 5 is a flowchart showing the contents of a main tray replacement process during standby for analysis.

As shown in Fig. 5, during standby for analysis, in which the first reaction vessel transportation unit 113 is stopped, the operator operates the operating device 119 to request replacement of the reaction-vessel housing container (step S410). The replacement request may be transmitted/received from an external host computer.

When the main tray 132 is subsequently replaced, the operator opens the main tray cover 134 (step S410), manually replaces the main tray 132 (step S420), and closes the main tray cover 134 (step S430).

Subsequently, the operator inputs a main-tray replacement completion report on the screen of the operating device 119 (step S440), so that the replacement operation is completed (step S450).

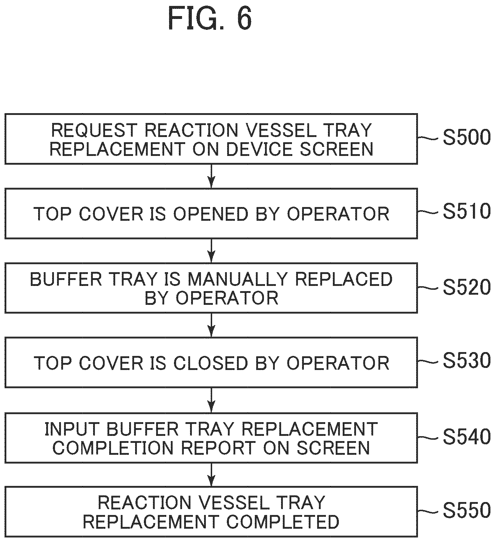

Fig. 6 is a flowchart showing the contents of a buffer tray replacement process during standby for analysis.

As shown in Fig. 6, during standby for analysis, in which the first reaction vessel transportation unit 113 is stopped, the operator operates the operating device 119 to request replacement of the reaction vessel housing container (step S500). The replacement request may be transmitted/received from an external host computer.

When the buffer tray 133 is subsequently replaced, the operator opens the top cover 135 (step S510), manually replaces the buffer tray 133 (step S520), and closes the top cover 135 (step S530).

Subsequently, the operator inputs a buffer-tray replacement completion report on the screen of the operating device 119 (step S540), so that the replacement operation is completed (step S550) .

As described above, in this embodiment, it is possible to manually replace the main tray 132 and the buffer tray 133 during standby for analysis, without providing a dedicated conveying mechanism for replacing the consumable housing vessel.

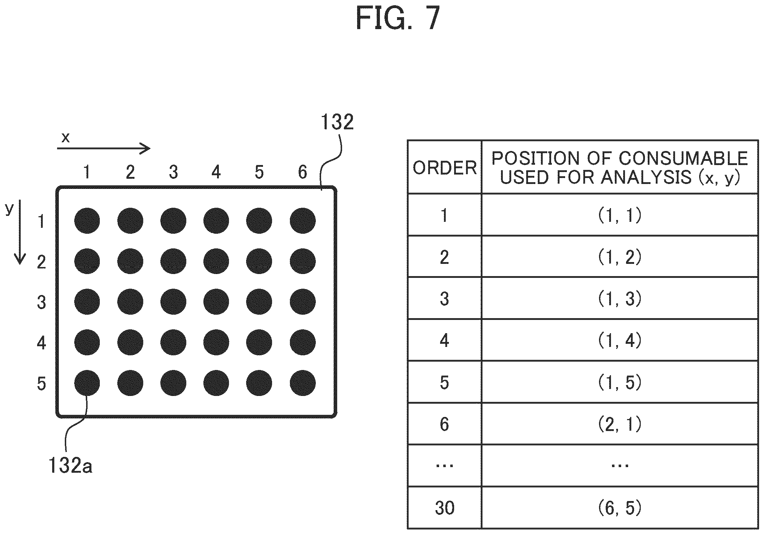

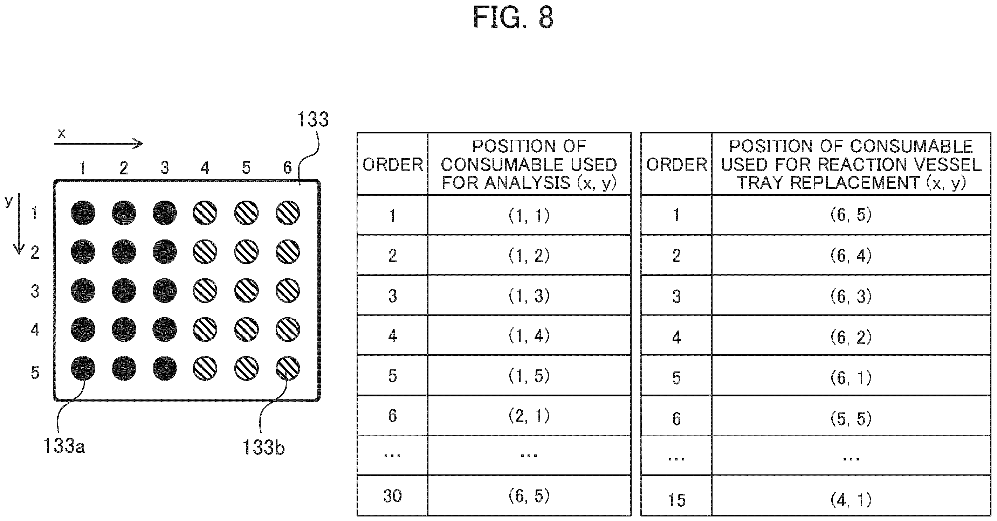

Fig. 7 illustrates use order of reaction vessels arranged on the main tray. Fig. 8 illustrates use order of reaction vessels arranged on the buffer tray. For the main tray 132 and the buffer tray 133 in Figs. 7 and 8, when viewed from the front side (the lower side in Fig. 1) of the automatic analyzer 101, the x-axis is set horizontally, the y-axis is set longitudinally, and the origin is set at the back left corner, and the position of each reaction vessel is represented by coordinates.

As shown in Fig. 7, the reaction vessels 132a arranged on the main tray 132 are used in the analytic operations in order from an end, for example, in order of the coordinates (x, y) = (1, 1), (1, 2), ..., (6, 5).

On the other hand, as shown in Fig. 8, the reaction vessels 133a and 133b used during analytic operations and the reaction vessels 133b used during replacement of the reaction vessel tray (main tray 132) are arranged in separate regions on the buffer tray 133. The region for the reaction vessels 133b is set farther away from the main tray 132. The reaction vessel 133a and the reaction vessel 133b are of the same type, and the reaction vessels 133a and 133b (or the regions) can be appropriately set to be used during analytic operations or during replacement of the reaction vessel tray. In this case, both the reaction vessels 133a and 133b are used during analytic operations, and the reaction vessels 133b are exclusively used during replacement of the reaction vessel tray (main tray 132). In other words, the reaction vessels 133a are used only during analytic operations.

The reaction vessels 133a arranged on the buffer tray 133 are used, for example, when analytic operations are continued in a state where no reaction vessel remains on the main tray 132, and are used, for example, in order from the end closest to the main tray 132, for example, in order of the coordinates (x, y) = (1, 1), (1, 2), ..., (6, 5).

The reaction vessels 133b arranged on the buffer tray 133 are used when the analytic operations are continued during replacement of the main tray 132, and are used, for example, in order from the end furthest from the main tray 132, for example, in order of the coordinates (x, y) = (6, 5, 1), (1, 2), ..., (4, 1). As described above, the region of the reaction vessels 133b is set farther from the main tray 132, which makes it possible to prevent the first reaction vessel transportation unit 113 from approaching operator's hand during replacement of the main tray 132, and thus prevent contact between the operator's hand and the first reaction vessel transportation unit 113. The reaction vessels 133b used during replacement of the main tray 132 may be controlled to be used in a different order from the use order of the reaction vessels 133a used during analytic operations.

Fig. 9 is a flowchart showing the contents of a reaction vessel tray condition determination process.

As shown in Fig. 9, in the reaction vessel tray use condition determination process (Fig. 3: step S200), first, reaction vessel loading conditions at the leading housing positions (Pos. Start) on the main tray 132 and the buffer tray 133 are checked with the first reaction vessel transportation unit 113 (Step S210). At this time, the reaction vessel loading conditions may be checked for all housing positions on the main tray 132 and the buffer tray 133. The leading position of the reaction vessel on the main tray 132 is (x, y) = (1, 1) as shown in Fig. 7, while the leading position of the reaction vessel on the buffer tray 133 is (x, y) = (1, 1) as shown in Fig. 8.

In a possible method for checking the loading condition, for example, the loading condition is checked using operation of the conveying mechanism to grasp a consumable, or existence/nonexistence of a consumable is checked by image analysis with a camera installed above the housing container. A distance measuring device such as a laser displacement meter may be attached to the first reaction vessel transportation unit 113 to check existence/nonexistence of a consumable by measuring a distance between the conveying mechanism and the housing container.

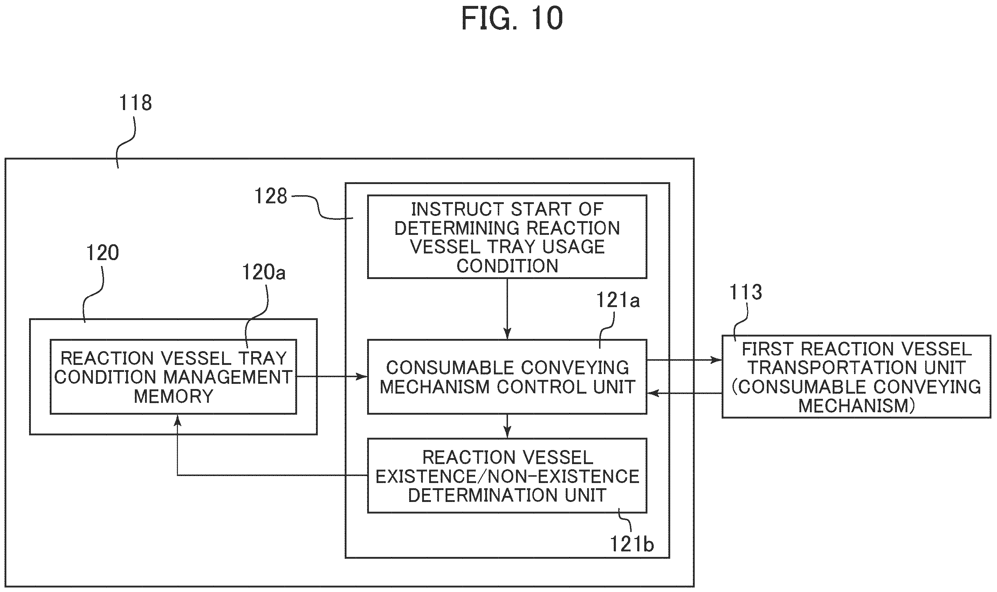

Fig. 10 is a functional block diagram of the control section when the reaction vessel tray condition determination process is performed through end operation of the first reaction vessel transportation unit.

The control section 118 includes a reaction vessel tray condition management memory 120a provided in the storage device 120, and a consumable conveying mechanism control unit 121a and a reaction vessel existence/non-existence determination unit 121b provided in the control device 121.

When the reaction vessel tray use condition determination process is started, the consumable conveying mechanism control unit 121a outputs a command to the first reaction vessel transportation unit 113 to grasp a predetermined consumable position based on the information stored in the reaction vessel tray condition management memory 120a. The reaction vessel existence/non-existence determination unit 121b determines existence/non-existence of a consumable based on a result of grasping a consumable by the first reaction vessel transportation unit 113, and stores the determination result as a reaction vessel tray condition in the reaction vessel tray condition management memory 120a.

Return to Fig. 9. For the buffer tray 133, if the determination result in step S210 is YES, that is, if a reaction vessel exists (is loaded) at the leading housing position (Pos. Start) on the buffer tray 133, it is determined whether the storage device 120 stores a position of the consumable used on the buffer tray 133 used during replacement of the main tray 132 (step S220). If the determination result in step S220 is NO, that is, if the position E(x, y) of the consumable used during replacement of the main tray 132 is not stored in the storage device 120, since the reaction vessels are determined to be housed in all loading positions, the buffer tray 133 are determined to be usable (step S221), and the processing proceeds to a buffer tray 133 condition determination process (step S250). If the determination result in step S220 is YES, that is, if there is a use record of a reaction vessel on the buffer tray 133, a value, which is obtained by subtracting the number of used reaction vessels up to the final position (Pos. End) of the reaction vessel from the number of holdable reaction vessels, is stored in the storage device 120 as the remaining reaction vessel number on the buffer tray 133, and the buffer tray 133 is determined to be usable (step S222), and the processing proceeds to a buffer-tray-133 condition determination process (step S250).

Since the main tray 132 is exempt from the determination in step S220, if the determination result in step S210 is YES, the reaction vessels are determined to be housed in all loading positions, and the main tray 132 are determined to be usable (step S221), and the processing proceeds to a main tray 132 condition determination process (step S250).

If the determination result in step S210 is NO, that is, if no consumable is determined to be loaded at the leading housing position, the housing container is recognized to be not a new one, and thus it is determined whether a reaction vessel is loaded at the housing position S(x, y) next to the last accessed reaction vessel housing position, among the positions from the leading position stored in the storage device 120 to the reaction vessel housing position used for the analytic operations (step S230). If the determination result in step S230 is NO, that is, if no reaction vessel is loaded at the housing position S(x, y) on the reaction vessel tray (main tray 132/buffer tray 133), the remaining number of reaction vessels is determined to be zero, and the reaction vessel tray (main tray 132/buffer tray 133) is determined to be unusable (step S231), and the processing proceeds to a main tray/buffer tray condition determination process (Step S250).

For the buffer tray 133, if the determination result in step S230 is YES, that is, if a reaction vessel is loaded at the housing position S(x, y) on the buffer tray 133, it is determined whether the storage device 120 stores the consumable position used during replacement of the reaction vessel tray (step S240). If the determination result in step S240 is NO, that is, if the storage device 120 does not store the consumable position E(x, y) used during replacement of the reaction vessel tray, the value, which is obtained by subtracting the number of used reaction vessels up to the leading housing position (Pos. Start) from the number of holdable reaction vessels, is stored in the storage device 120 as the remaining number, and the reaction vessel tray is determined to be usable (step S242), and the processing proceeds to a buffer tray 133 condition determination process (step S250). If the determination result in step S240 is YES, that is, if there is a use record of a reaction vessel on the buffer tray 133, a value, which is obtained by subtracting the number of used reaction vessels up to the reaction vessel leading position (Pos. Start) and the number of used reaction vessels up to the reaction vessel final position (Pos. End) from the number of holdable reaction vessels, is stored in the storage device 120 as the remaining reaction vessel number on the buffer tray 133, and the buffer tray 133 is determined to be usable (step S241), and the processing proceeds to the buffer tray 133 condition determination process (step S250).

Since the main tray 132 is exempt from the determination in step S240, if the determination result in step S230 is YES, a value, which is obtained by subtracting the number of used reaction vessels up to the leading housing position (Pos. Start) from the number of holdable reaction vessels, is stored in the storage device 120 as the remaining number, and the reaction vessel tray is determined to be usable (step S242), and the processing proceeds to the main tray 132 condition determination process (step S250).

In step S250, conditions of the main tray 132 and the buffer tray 133 are determined based on the remaining number of reaction vessels determined through the processes of steps S210 to S242. When the process of step S250 is completed, the reaction vessel tray use condition determination process is completed (step S260).

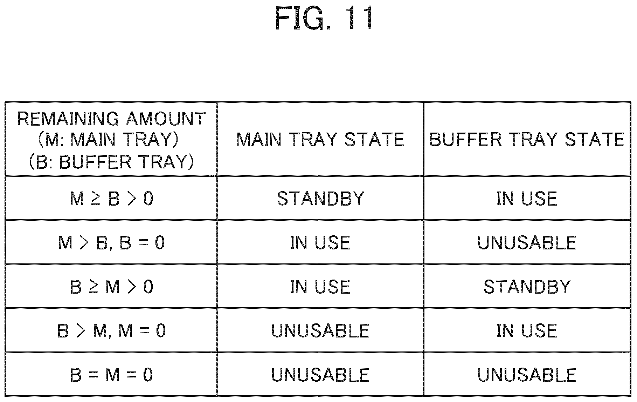

Fig. 11 is a state management table used for a determination process of states of the main tray and the buffer tray.

In Fig. 11, a tray in the "in use" state indicates that the tray is currently in use or will be used in the next measurement. A tray in the "standby" state indicates that the tray can be used and will be used as soon as the other tray becomes unusable. A tray in the "unusable" state indicates that the tray is not used for measurement.

For the trays, a tray with a smaller remaining number of reaction vessels is preferentially used, and if the trays have the same number of reaction vessels, the main tray is preferentially used.

When a tray is determined to be "unusable," an operator is desirably notified of such determination in a form of alarm indication and prompted to replace the tray with a new one.

The management method and the determination method of the use condition of the reaction vessel tray configured as above are each merely one example. In another possible example, when a reaction vessel loading condition stored in the storage device 120 differs from an actual reaction vessel loading condition, a classification of the use condition, such as "history unknown", is provided. A function for determining the use condition may be provided as one device maintenance function so that a user can check the use condition at that time by executing the relevant item, even at timing other than the timing described above.

The timing (date and time) of the use condition determination is desirably stored in the storage device 120 together with the determination result. This is to prevent an old reaction vessel from remaining and being used in a deteriorated condition, in terms of reliability of analytical performance. If all the reaction vessels on the tray have not been consumed even after a certain period of time has passed from replacement with a new tray, a user may be notified of such an event by an alarm indication and prompted to replace the relevant housing container, or the automatic analyzer may automatically discard all consumables on that tray, or may stop use of that housing container. From the viewpoint of usability, the expiration date can be desirably set freely within a period, during which quality is guaranteed, for a certain period during which the replacement of consumables is prompted. In addition, the user can preferably select how to process of the consumables after such a certain period has elapsed.

Effect of this embodiment configured as above are now described.

For the automatic analyzer, if analytic operations are interrupted during replacement, collection, or disposal of a consumable or a reagent, throughput or test accuracy may be reduced. In the background art, a dedicated mechanism is provided for replacing consumables without interrupting analytic operations, in addition to the mechanism for normal replacement of consumables. However, if a dedicated mechanism is provided, the analyzer may become larger and more costly.

In contrast, in this embodiment, the automatic analyzer 101 includes the analysis section (including, for example, the incubator block 111 and the immunodetection unit 116) that executes a process required for analyzing a sample, the consumable supply section (including, for example, the reaction vessel trays 112 and the first reaction vessel transportation unit 113) that supplies a consumable required for analysis to the analysis section, and the control section 118 that controls operations of the analysis section and the consumable supply section, where the consumable supply section includes a first consumable holder (for example, the main tray 132) capable of holding the first consumable housing vessel that houses multiple consumables, a second consumable holder (for example, the buffer tray 133) capable of holding the second consumable housing vessel that houses multiple consumables, and the conveying mechanism (for example, the first reaction vessel transportation unit 113) for conveying the consumables in the first consumable holder and the second consumable holder to the analysis section, and the control section is configured to perform control so as to enable access of an operator to the first consumable holder and disable access of the operator to the second consumable holder during analytic operations by the analysis section, and to enable access of the operator to the first and second consumable holders during no analytic operation by the analysis section, making it possible to replace consumables without interrupting analytic operations while suppressing increase in size and cost of the analyzer.

### Additional notes

The invention should not be limited to the above embodiment, and includes various modifications and combinations within the scope without departing from the gist of the invention. The invention is not limited to those with all the configurations described in the embodiment above, but includes those with some of the configurations removed. The above configurations, functions, etc. may be achieved by designing some or all of them in an integrated circuit, for example. Furthermore, the above configurations, functions, etc. may be achieved by software with a processor that interprets and executes a program enabling each function.

### List of Reference Signs

101 automatic analyzer, 102 sample mount disc, 103 sample container, 104 sample dispensing mechanism, 105 reagent storage, 106 reagent disc, 107 reagent container holder, 108 reagent dispensing mechanism, 109 reagent discharge position, 110 reaction vessel disposal hole, 111 incubator block, 112 reaction vessel tray, 113 first reaction vessel transportation unit, 114 sample discharge position, 115 second reaction vessel transportation unit, 116 immunodetection unit, 117 reaction liquid aspiration position, 118 control section, 119 operating device, 120 storage device, 120a reaction vessel tray condition management memory, 121 control device, 121a consumable conveying mechanism control unit, 121b reaction vessel existence/non-existence determination unit, 122 display device, 132 main tray, 132a reaction vessel, 133 buffer tray, 133a, 133b reaction vessel, 134 main tray cover, 135 top cover

## Claims

1. An automatic analyzer comprising:
an analysis section for executing a process required for analyzing a sample;
a consumable supply section for supplying a consumable required for analysis to the analysis section; and
a control section for controlling operations of the analysis section and the consumable supply section, wherein:
the consumable supply section includes a first consumable holder capable of holding a first consumable storage vessel for storing multiple consumables, a second consumable holder capable of holding a second consumable storage vessel for storing multiple consumables, and a conveying mechanism for conveying the consumables held by the first consumable holder and the second consumable holder to the analysis section; and
the control section executes controlling operations to allow access of an operator to the first consumable holder, and to disable access of the operator to the second consumable holder while the analysis section is executing analytic operations, and to allow access of the operator to the first and the second consumable holders while the analysis section is not executing the analytic operations.

2. The automatic analyzer according to claim 1, wherein the first consumable storage vessel has the same shape as that of the second consumable storage vessel, each of which stores multiple consumables aligned with one another.

3. The automatic analyzer according to claim 1, further comprising:
a first cover for covering the first consumable holder; and
a second cover for covering the second consumable holder and the analysis section integrally.

4. The automatic analyzer according to claim 3, wherein:
the first cover includes a first opening/closing lock mechanism;
the second cover includes a second opening/closing lock mechanism; and
the control section controls the first and the second opening/closing lock mechanisms to allow/disable the operator to open or close the first and the second covers, and to further allow/disable the operator to access the first and the second consumable holders.

5. The automatic analyzer according to claim 1, wherein in response to a request for replacement of the first consumable storage vessel when using the consumable stored in the first consumable storage vessel, the control section controls the conveying mechanism to use the consumable stored in the second consumable storage vessel.

6. The automatic analyzer according to claim 5, wherein when the operator replaces the first consumable storage vessel, the conveying mechanism is controlled to use the consumable stored in a specified range of the second consumable storage vessel.

7. The automatic analyzer according to claim 5, wherein:
the control section further includes an operating device which allows an input operation by the operator; and
the replacement request is processed through the input operation to the operating device.

8. The automatic analyzer according to claim 1, wherein the control section manages the number of remaining consumables stored in the first and the second consumable storage vessels.

9. The automatic analyzer according to claim 8, wherein:
the control section includes a consumable existence/non-existence determination unit;
the consumable existence/non-existence determination unit determines with respect to existence or non-existence of the consumable at one or more consumable storage positions in the first consumable storage vessel and one or more consumable storage positions in the second consumable storage vessel; and
the control section acquires the number of remaining consumables based on a determination result of the consumable existence/non-existence determination unit.

10. The automatic analyzer according to claim 8, wherein the control section determines an order of using the first and the second consumable storage vessels based on the number of remaining consumables in the first and the second consumable storage vessels.

11. The automatic analyzer according to claim 1, wherein:
the control section further includes a display section; and
the control section manages a time period elapsing from a time point when the first and the second consumable storage vessels have been mounted, and upon passage of a predetermined time period, draws the operator's attention through display on the display section to replace the first and the second consumable storage vessels.

12. The automatic analyzer according to claim 4, wherein the control section allows release of the first and the second opening/closing lock mechanisms only when the conveying mechanism retracts into a predetermined retraction range.

## Amended claims

### Amended claims under Art. 19.1 PCT

1. An automatic analyzer comprising:
an analysis section for executing a process required for analyzing a sample;
a consumable supply section for supplying a consumable required for analysis to the analysis section; and
a control section for controlling operations of the analysis section and the consumable supply section, wherein:
the consumable supply section includes a first consumable holder capable of holding a first consumable storage vessel for storing multiple consumables, a second consumable holder capable of holding a second consumable storage vessel for storing multiple consumables, and a conveying mechanism for conveying the consumables held by the first consumable holder and the second consumable holder to the analysis section;
the control section executes controlling operations to allow access of an operator to the first consumable holder, and to disable access of the operator to the second consumable holder while the analysis section is executing analytic operations, and to allow access of the operator to the first and the second consumable holders while the analysis section is not executing the analytic operations; and
in response to a request for replacement of the first consumable storage vessel when using the consumable stored in the first consumable storage vessel, the control section controls the conveying mechanism to use the consumable stored in the second consumable storage vessel.

2. The automatic analyzer according to claim 1, wherein the first consumable storage vessel has the same shape as that of the second consumable storage vessel, each of which stores multiple consumables aligned with one another.

3. The automatic analyzer according to claim 1, further comprising:
a first cover for covering the first consumable holder; and
a second cover for covering the second consumable holder and the analysis section integrally.

4. The automatic analyzer according to claim 3, wherein:
the first cover includes a first opening/closing lock mechanism;
the second cover includes a second opening/closing lock mechanism; and
the control section controls the first and the second opening/closing lock mechanisms to allow/disable the operator to open or close the first and the second covers, and to further allow/disable the operator to access the first and the second consumable holders.

5. (Deleted)

6. (Amended) The automatic analyzer according to claim 1, wherein when the operator replaces the first consumable storage vessel, the conveying mechanism is controlled to use the consumable stored in a specified range of the second consumable storage vessel.

7. (Amended) The automatic analyzer according to claim 1, wherein:
the control section further includes an operating device which allows an input operation by the operator; and
the replacement request is processed through the input operation to the operating device.

8. The automatic analyzer according to claim 1, wherein the control section manages the number of remaining consumables stored in the first and the second consumable storage vessels.

9. The automatic analyzer according to claim 8, wherein:
the control section includes a consumable existence/non-existence determination unit;
the consumable existence/non-existence determination unit determines with respect to existence or non-existence of the consumable at one or more consumable storage positions in the first consumable storage vessel and one or more consumable storage positions in the second consumable storage vessel; and
the control section acquires the number of remaining consumables based on a determination result of the consumable existence/non-existence determination unit.

10. The automatic analyzer according to claim 8, wherein the control section determines an order of using the first and the second consumable storage vessels based on the number of remaining consumables in the first and the second consumable storage vessels.

11. The automatic analyzer according to claim 1, wherein:
the control section further includes a display section; and
the control section manager a time period elapsing from a time point when the first and the second consumable storage vessels have been mounted, and upon passage of a predetermined time period, draws the operator's attention through display on the display section to replace the first and the second consumable storage vessels.

12. The automatic analyzer according to claim 4, wherein the control section allows release of the first and the second opening/closing lock mechanisms only when the conveying mechanism retracts into a predetermined retraction range.

Statement under Art. 19.1 PCT
Claim 1 is amended to incorporate the features of claim 5, which is found to have novelty and inventive step in the written opinion of the International Searching Authority.

Therefore, claim 1 is not obvious over cited documents 1 to 4, and has an inventive step.
